# EUROPÄISCHE PATENTSCHRIFT

(11) **EP 2 251 661 B1**
(45) Veröffentlichungstag und Bekanntmachung des Hinweises auf die Patenterteilung: **02.01.2013**
(21) Anmeldenummer: 10153256.2
(22) Anmeldetag: 11.02.2010
(51) Int. Cl.: G01L 1/22

(54) **Kraftmessvorrichtung**
Force measuring device
Dispositif de mesure de force

(30) Priorität: 15.05.2009 DE 102009022343
(43) Veröffentlichungstag der Anmeldung: 17.11.2010
(73) Patentinhaber: Brosa AG, 88069 Tettnang (DE)
(72) Erfinder:
(74) Vertreter: Engelhardt, Guido

(56) Entgegenhaltungen:
- DE-A1- 10 203 872
- FR-A1- 2 890 442
- US-A- 4 285 234
- US-A1- 2002 059 837

## Beschreibung

Die Erfindung bezieht sich auf eine Messvorrichtung nach dem Oberbegriff des Patentanspruches 1. Eine derartige Messvorrichtung ist aus DE 102 03 872 bekannt.

Für eine Vielzahl von technischen Anwendungen ist es erforderlich, die auf eine Hebevorrichtung einwirkenden Kräfte exakt zu kennen, um zu verhindern, dass durch ein unvorhergesehene Kraftüberlastung die Hebevorrichtung beschädigt wird. Insbesondere bei Kranvorrichtungen, Hebevorrichtungen für Container, Aufzügen für Personen und Material oder sonstigen Transportanlagen ist es erforderlich, solche Kräfte zu erfassen, um eine Überlastung, beispielsweise der Tragseile, der Umlenkrollen oder des Traggestells zu verhindern.

Aus der FR 2,890,442 ist eine Messvorrichtung zu entnehmen, durch die axial wirkende Kräfte aufgenommen und messbar sind. Die Messvorrichtung weist einen ringförmigen Grundkörper auf, an dem eine Vielzahl von Auflagern derart angeformt sind, dass jeweils zwei Auflager fluchtend gegenüberliegend verlaufen, an denen die axialen Kräfte ein- oder ausgeleitet sind. An der dem Zentrum des Grundkörpers zugewandten Innenmantelfläche zwischen zwei Paaren von Auflagern ist eine Messstelle vorgesehen.

Nachteilig bei der Messvorrichtung nach der FR 2,890,442 ist anzusehen, dass die Messstellen seitlich versetzt zu den Paaren von Auflagern verlaufen und somit nicht unmittelbar im Kraftfluss zwischen zwei Paaren von Auflagern liegen. Darüber hinaus ist die Wandstärke des ringförmigen Grundkörpers relativ gering ausgestaltet, so dass lediglich geringe Verwindungskräfte abgestützt werden können, denn zwischen zwei benachbarten Paaren von Auflagern ist lediglich ein dünnwandiger bogenförmiger Steg vorgesehen, dessen Torsionssteifigkeit gering ist.

In der US 4,065,962 ist eine Messvorrichtung beschrieben, in deren Grundkörper vier in dessen Mantelfläche eingearbeitete Durchgangsöffnungen vorgesehen sind. An den seitlichen Ringflächen der jeweiligen Durchgangsöffnung sind die Dehnmessstreifen angeordnet. Die axial auf den Grundkörper einwirkenden Kräfte sind in voneinander durch Nuten getrennte Ringbereiche aufgenommen; die Ringbereiche des Grundkörpers zur Kraftaufnahme und zur Kraftableitung sind räumlich voneinander getrennt und verlaufen im Wesentlichen seitlich versetzt zueinander. Zwischen zwei benachbarten Ringbereichen der Krafteinleitung und der Kraftableitung sind die jeweiligen Durchgangsöffnungen mit den Dehnmessstreifen vorgesehen.

Als nachteilig bei dem zitierten Stand der Technik hat sich herausgestellt, dass die Messung lediglich dann ein zuverlässiges Messergebnis liefert, wenn die Kräfte exakt parallel zu der Längsachse des Grundkörpers verlaufen und zu dieser vollflächig eingeleitet sind, also senkrecht in die Stützplatten bzw. den Ringbereichen eingeleitet sind. Sobald die Kräfte aus der axialen Richtung abgelenkt sind, wird das Messergebnis verfälscht, denn die einzelnen Kraftkomponenten bewirken eine unterschiedliche Belastung des Grundkörpers und der in dem Grundkörper vorgesehenen Messstellen, so dass die einzelnen an dem Grundkörper befestigten Dehnmessstreifen die eingeleiteten Kräfte nicht vollständig aufnehmen. Eine solche Verfälschung des Messergebnisses entsteht beispielsweise, wenn die auf die Messvorrichtung einwirkende Halteplatte durchgebogen ist oder wenn Verunreinigungen die Krafteinleitung auslenken, da keine definierten vorgegebenen Bereiche zur Kraftübertragung vorgegeben sind. Bei Abweichungen von Messergebnissen werden jedoch Fehlsteuerungen hervorgerufen, die im Ernstfall dazu führen könnten, dass Unfälle an Hebevorrichtungen, Kränen und dgl. auftreten. Wenn folglich die tatsächlich aufgenommenen Gewichtskräfte nicht exakt bestimmt werden, führt dies oftmals zu Überlast an den eingesetzten Seilen und Tragvorrichtungen, so dass die aufgenommen Gewichtskräfte, beispielsweise Container oder dgl., herunterfallen oder die Hebevorrichtung beschädigen.

Als weiterer Nachteil für die in den angegebenen Druckschriften beschriebenen Kraftaufnehmer oder Messvorrichtungen hat sich herausgestellt, dass diese lediglich in Umgebungen eingesetzt werden können, in denen praktisch keinerlei Verunreinigungen in der Luft vorhanden sind. Die Dehnmessstreifen sind nämlich auf die vorgegebene Messstelle aufgeklebt. Durch Feuchtigkeitseintritt ist die Klebeschicht zerstörbar, so dass die Wirkverbindung zwischen dem Dehnmessstreifen und der Oberfläche der Oberfläche der Messstelle gelöst ist. Insbesondere im Bereich von Hafenbecken, in deren Bereich eine Vielzahl von Hebevorrichtungen eingesetzt werden, ist die Umgebungsluft jedoch salzhaltig und weist einen pH-Wert von weniger als 7 auf, so dass es erforderlich ist, die einzelnen Messstellen wasser- und luftdicht zu verschließen. Durch den angegebenen Stand der Technik werden keinerlei konstruktive Maßnahmen vorgestellt, durch die die einzelnen Messstellen und die dort angebrachten Dehnmessstreifen wasser- und luftdicht verschlossen werden könnten.

Es ist daher Aufgabe der Erfindung, eine Messvorrichtung der eingangs genannten Gattung zur Verfügung zu stellen, bei der gewährleistet ist, dass auch bei Kraftverläufen, die aus der Längsachse des Grundkörpers der Messvorrichtung geneigt, oder die durch Verunreinigungen ausgelenkt sind, die Kraftkomponenten ermittelbar sind, so dass durch die Messvorrichtung eine zuverlässige Bestimmung der eingeleiteten Gesamtkräfte ermöglicht ist. Darüber hinaus soll die Messvorrichtung an Positionen von Hebe- und sonstigen Kranvorrichtungen einsetzbar sein, die in verunreinigter, insbesondere säurehaltiger Umgebungsluft, zu betreiben sind. Insbesondere soll die erfindungsgemäße Messvorrichtung am sogenannten Twistlock einsetzbar sein, durch den ein oder mehrere Container an einem sogenannten Spreader zu deren Transport aus oder in Containerschiffen eingesetzt werden.

Diese Aufgaben werden erfindungsgemäß durch die im kennzeichnenden Teil des Patentanspruches 1 genannten Merkmale gelöst.

Weitere vorteilhafte Weiterbildungen der Erfindung ergeben sich aus den abhängigen sprüchen.

Dadurch, dass die an den zwei gegenüberliegenden Stützplatten angeformten Auflager jeweils exakt fluchtend zueinander ausgerichtet sind und zwischen diesen eine der Messstellen angeordnet ist, sind die auf die Auflager einwirkenden Kraftkomponenten unmittelbar im Bereich der Messstelle angeordneten Dehnmessstreifen ein- und ausgeleitet, so dass auch schräg verlaufende Kräfte, die lediglich eine bestimmte axial wirkende Kraftkomponente aufweisen, zuverlässig durch die Messstelle geleitet sind, so dass die Biegungen, Stauchungen und Streckungen sowie sonstige Verformungen im Bereich der Messstelle durch die Dehnmessstreifen erfassbar und in elektronische Signale umwandelbar sind.

Aufgrund der geometrischen Ausbildung der Messvorrichtung, insbesondere durch die von dem Grundkörper nach außen überstehenden Stützplatten, ist erreicht, dass an diesen eine Dichtungshülse wasser- und luftdicht angebracht werden kann, so dass die einzelnen Messstellen nach außen gekapselt sind. Es ist ohne weiteres denkbar, die einzelnen Messstellen individuell nach außen zu verschließen, beispielsweise durch eine Haube, durch die die Ausnehmung der Messstellen wasser- und luftdicht verschlossen ist. Somit kann vorteilhafterweise die Messvorrichtung an Hebeeinrichtungen, beispielsweise Kranen oder dgl. eingesetzt werden, die in einer Umgebung aufgestellt sind, die äußerst aggressive, die Dehnmessstreifen beschädigende Eigenschaften aufweist.

In der Zeichnung sind zwei erfindungsgemäße Ausführungsbeispiele der Messvorrichtung dargestellt, die nachfolgend näher erläutert sind. Im Einzelnen zeigt:
- Figur 1: ein erstes Ausführungsbeispiel einer Messvorrichtung mit einem Grundkörper, in dessen Mantelfläche drei Messstellen vorgesehen sind und mit zwei an dem Grundkörper angeformten Stützplatten, an denen jeweils drei Auflager angearbeitet sind, in perspektivischer Ansicht,
- Figur 2: die Messvorrichtung gemäß Figur 1, in Draufsicht,
- Figur 3a: die Messvorrichtung gemäß Figur 2 entlang der Schnittlinie III-III,
- Figur 3b: die Messvorrichtung gemäß Figur 3a mit den aufgenommenen Kräften,
- Figur 4: ein zweites Ausführungsbeispiel einer Messvorrichtung mit einem Grundkörper und zwei an diesem angebrachten Stützplatten, an denen jeweils vier Auflager angeformt sind, in Draufsicht,
- Figur 5: die Messvorrichtung gemäß Figur 4 entlang der Schnittlinie V-V,
- Figur 6a: eine vergrößerte Detailansicht der Messstelle aus Figur 1,
- Figur 6b: eine vergrößerte Detailansicht der Messstelle aus Figur 5 und
- Figur 7: ein Anwendungsbeispiel für die Messvorrichtung gemäß Figur 1.

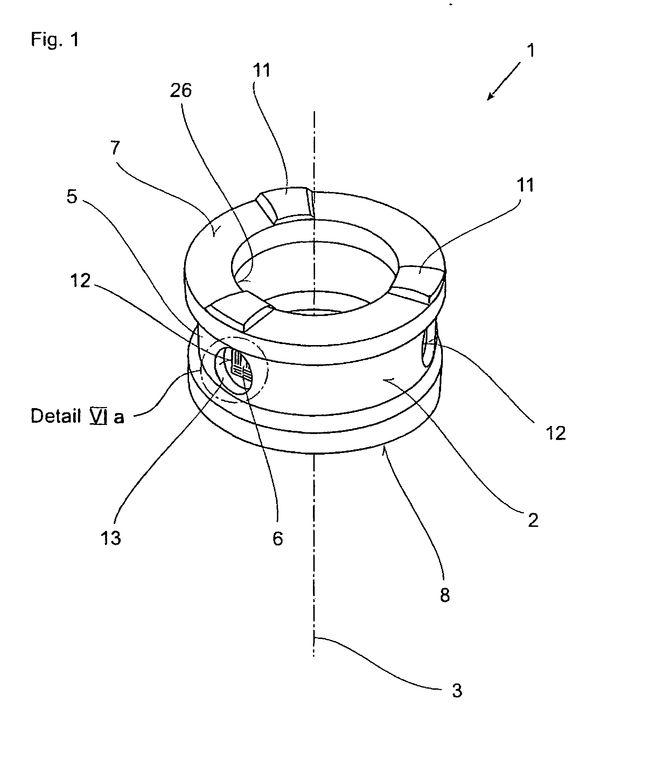

In den Figuren 1, 2, 3a und 3b ist eine Messvorrichtung 1 zu entnehmen, durch die Druck- oder Zugkräfte, die auf die Messvorrichtung 1 einwirken, ermittelt werden, um sicherzustellen, dass die abzustützenden Kräfte einen vorgegebenen Grenzwert nicht übersteigen. Die Messvorrichtung 1 besteht aus einem zylinderförmigen Grundkörper 2, der eine äußere Mantelfläche 5 aufweist. Auf die beiden freien Flächen der Stirnseite des Grundkörpers 2 ist jeweils eine ringförmige Stützplatte 7 und 8 angeformt, auf denen jeweils drei nach außen abstehende ballige Auflager 11 vorgesehen sind. Die Stützplatten 7 und 8 verlaufen demnach senkrecht zu der von dem Grundkörper 2 gebildeten Längsachse 3. Der Grundkörper 2, die beiden Stützplatten 7 und 8 sowie die insgesamt sechs Auflager 11 sind aus einem Ausgangskörper gefertigt, der aus einem hochfesten mechanisch belastbaren Werkstoff, beispielsweise Edelstahl, hergestellt ist. Die drei Auflager 11 der jeweiligen Stützplatte 7 bzw. 8 sind in einem Winkel von 120° zueinander angeordnet und bilden demnach eine DreiPunkt-Lagerung.

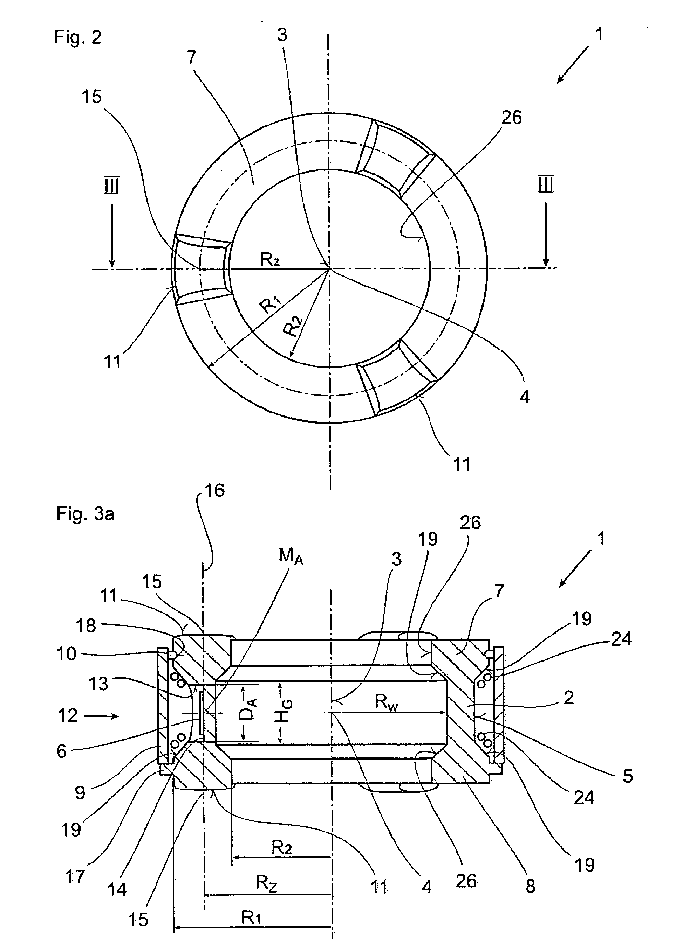

Insbesondere aus Figur 2 ist ersichtlich, dass in die Stützplatten 7 und 8 eine Durchgangsöffnung 26 eingearbeitet ist, die einen Radius R₂ ausgehend von dem Mittelpunkt 4 des Grundkörpers 2 aufweist. Des Weiteren ist dort ersichtlich, dass die drei Auflager 11 aus der Ebene, die von der Stützplatte 7 oder 8 gebildet ist, abstehen und dass die Auflager 11 ballig ausgebildet sind. Die Draufsicht auf die Auflager 11 zeigt ferner, dass die Außenkontur des jeweiligen Auflagers 11 trapezförmig ausgestaltet ist, und zwar in Richtung des Mittelpunktes 4 des Grundkörpers 2 verjüngend. Sowohl die geometrische Außenkontur der Auflager 11 als auch deren dreidimensionale Ausgestaltung kann an die entsprechende Messanforderung angepasst sein. Daher sind die Auflager 11 auch dom-, kuppel- oder pyramidenförmig bzw. quader- oder würfelförmig auszugestalten.

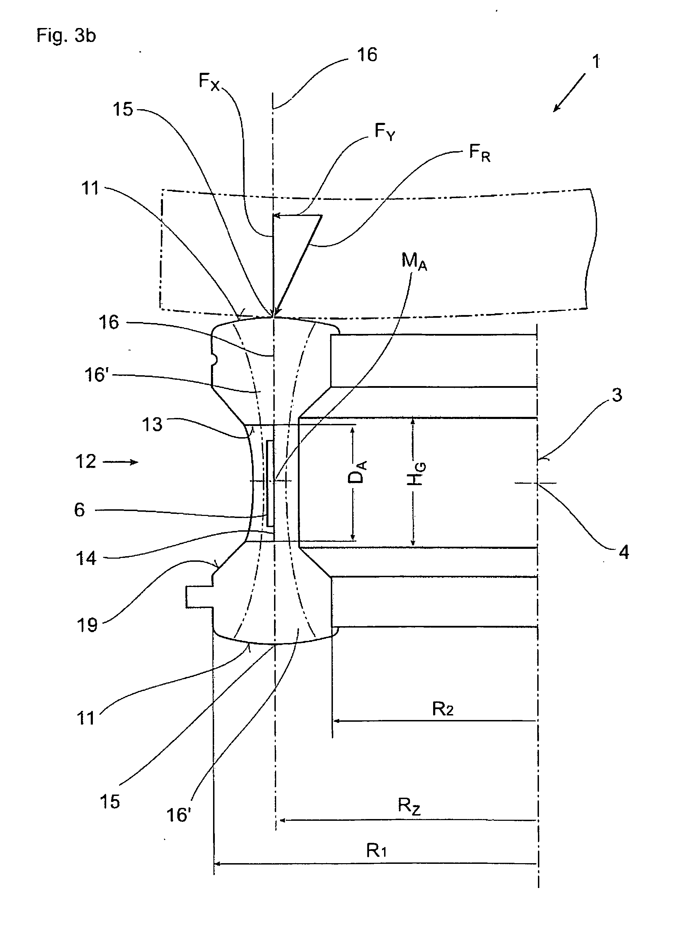

Die ballige oder domförmige Ausgestaltung der Auflager 11 bewirkt, dass die eingeleiteten Kräfte möglichst im Zentrum des jeweiligen Auflagers 11 verlaufen. Es ist besonders vorteilhaft, wenn etwa 80 bis 90 Prozent der eingeleiteten Kraft um das Zentrum des jeweiligen Auflagers 11 in Form eines Trichterverlaufes 16' konzentriert ist. Dies ist im einzelnen in Figur 3b abgebildet.

In Figur 3a ist der konstruktive und geometrische Aufbau der Messvorrichtung 1 ersichtlich. Die obere und untere Stützplatte 7 bzw. 8 überragen den Grundkörper 2 sowohl nach innen, also in Richtung der Längsachse 3 des Grundkörpers 2, als auch nach außen, so dass die Stützplatten 7 und 8 über die äußere Mantelfläche 5 des Grundkörpers 2 abstehen.

Die Stützplatten 7 und 8 sind zudem exakt fluchtend zueinander angeordnet. Dies bedeutet, dass die Stützplatten 7 und 8 nicht nur deckungsgleich verlaufen, sondern dass auch die drei auf der jeweiligen Stützplatte 7 bzw. 8 vorgesehene Auflager 11 zu dem jeweils benachbarten Auflager 11 der gegenüberliegenden Stützplatte 7 oder 8 fluchtend zueinander verlaufen. Die Mittelpunkte 15 des jeweiligen Auflagers 11 bildet dabei mit dem auf der anderen Stützplatte 7 oder 8 vorhandenen geometrischen Mittelpunkt 15 eine Kraftübertragungsachse 16. Im optimalen Zustand bezüglich der Krafteinleitung von außen verlaufen die Kraftkomponenten Fₓ exakt parallel zu der Kraftübertragungsachse 16. Jedoch können auch zu der von der Kraftübertragungsachse 16 ausgelenkte Kraftkomponenten F_{R} aufgenommen und weitergeleitet werden, ohne dass durch den aus der Richtung der Kraftübertragungsachse 16 ausgelenkter Kraftkomponenten F_{R} das Messergebnis verfälscht wird. Dies ist zum einen durch die exakt fluchtende Anordnung von zwei räumlich gegenüberliegenden und zueinander beabstandeten Auflagern 11 der jeweiligen Stützplatte 7 und 8 erreicht und zum anderen dadurch, dass im Bereich der Kraftübertragungsachse 16 jeweils eine Messstelle 12 - wie dies nachfolgend noch näher erläutert wird - vorgesehen ist.

Da ein wesentlicher Anteil F_{X} der eingeleiteten Kräfte F_{R} konzentriert um den Mittelpunkt 15 des jeweiligen Auflagers 11 ein- bzw. ausgeleitet ist, verläuft die axiale Kraftkomponente F_{X} konzentriert im Bereich der Kraftübertragungsachse 16. Dies ist in Figur 3b näher erläutert. Dort ist die Kraftverteilung in den Auflagern 11, der Stützplatte 7, 8 sowie des Grundkörpers 2 als Trichter 16' mit der Kraftübertragungsachse 16 als Mittelachse gezeigt. Eine solche Krafteinleitung F_{R} entsteht beispielsweise, wenn die Halteplatte aufgrund der einwirkenden und aufzunehmenden Gewichtskräfte diese durchbiegen. Dies ist in Figur 3b dargestellt. Folglich wird die zwischen den Auflagern 11 angeordnete Messstelle 12 durch die axiale Kraftkomponente Fₓ optimal beeinflusst, um die tatsächlich eingeleiteten Kräfte F_{R}, die aus der Längsachse 3 ausgelenkt sind, aufzunehmen.

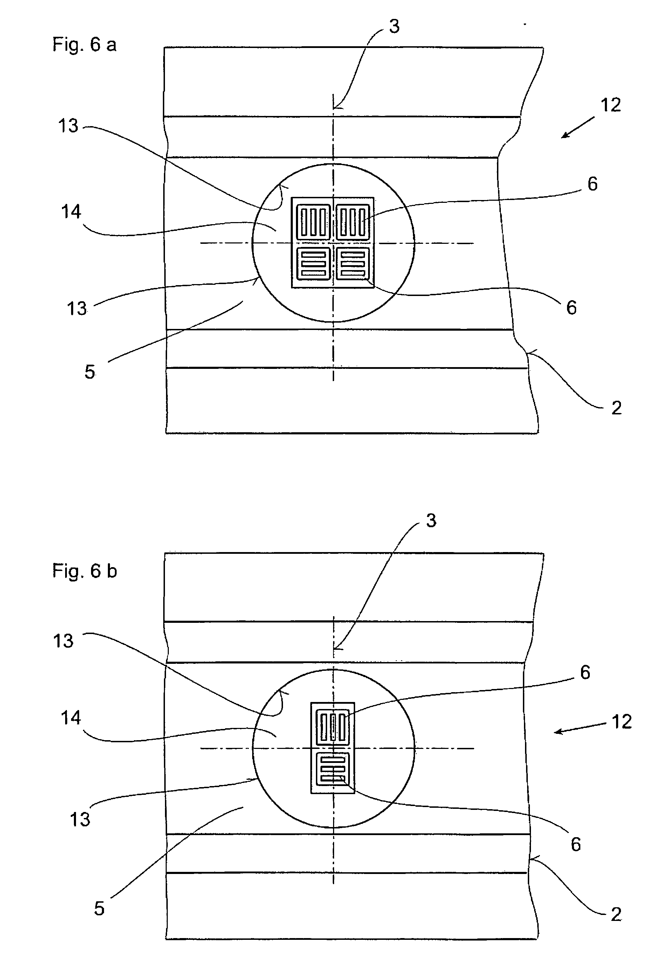

Die Messstelle 12 umfasst jeweils vier Dehnmessstreifen 6. Insbesondere aus Figur 6a ist ersichtlich, dass die beiden oberen Dehnmessstreifen 6 parallel zu der Längsachse 3 des Grundkörpers 2 und die beiden unteren Dehnmessstreifen 6 senkrecht zu der Längsachse 3 angeordnet sind. Durch diese Anordnung der Dehnmessstreifen 6 werden sämtliche Kraftkomponentenanteile von den Dehnmessstreifen 6 im Bereich der Messstelle 12 erfasst. Eine umgekehrte Anordnung des Dehnmessstreifens 6 kann aufgrund von bestimmten Messanordnungen erforderlich sein.

Zur Bildung der Messstelle 12 ist in die äußere Mantelfläche 5 eine runde Ausnehmung 13 mit einem Durchmesser D_{A} eingearbeitet. Der Boden der Ausnehmung 13 ist als innere Mantelfläche 14 gekennzeichnet. Die innere Mantelfläche 14 verläuft fluchtend zu der Kraftübertragungsachse 16. Es ist jedoch auch denkbar, die Ausnehmung 13 tiefer oder weniger tief in die äußere Mantelfläche 5 des Grundkörpers 2 einzuarbeiten, so dass die innere Mantelfläche 14 der Ausnehmung 13 seitlich versetzt und parallel zu der Kraftübertragungsachse 16 angeordnet sein kann. Die innere Mantelfläche 14 ist demnach entweder näher zum Mittelpunkt 4 des Grundkörpers 2 oder weiter entfernt von diesem angeordnet.

Der Grundkörper 2 weist eine Höhe H_{G}, die sich in dessen axialer Richtung 3 erstreckt auf; der Durchmesser D_{A} der Ausnehmung 13 liegt zwischen einem Wert von 0,3 bis 0,95 der Höhe H_{G} des Grundkörpers 2.

Der Mittelpunkt M_{A} der Ausnehmung 13 ist exakt zentrisch in den Grundkörper 13 eingearbeitet und verläuft folglich auf der Hälfte der Höhe H. Der Mittelpunkt M_{A} kann aus dieser Ebene nach oben oder unten verschoben sein, wenn dies erforderlich sein sollte.

Der Außenumfang der beiden Stützplatten 7 und 8 weist einen Radius R₁ auf; die geometrischen Mittelpunkte 15 der drei auf einer der Stützplatten 7 oder 8 angeordneten Auflager 11 liegen auf einem gemeinsamen Radius R_{z}. Die geometrischen Mittelpunkte 15 der drei jeweiligen Auflager 11 liegen demnach im gezeigten Ausführungsbeispiel auf einem Radius R_{z} = R₂ + (R₁ - R₂) \ 2.

Je nach Anwendungsfall kann ohne Weiteres der Radius R_{z} der geometrischen Mittelpunkte 15 nach außen oder in Richtung des Mittelpunktes 4 des Grundkörpers 2 verschoben sein.

Da die Messstellen 12 im Bereich zu der Kraftübertragungsachse 16 oder fluchtend zu dieser angeordnet ist, die von zwei gegenüberliegenden geometrischen Mittelpunkten 15 der Auflager 11 gebildet ist, wird auch bei einer schrägen Krafteinleitung F_{R} auf die Auflager 11 eine Verformung im Bereich der Mantelfläche 14 der Messstelle 12 erfolgen, so dass auch bei einer schrägen Krafteinleitung F_{R} ein zuverlässiges Messergebnis erzielt ist.

Zur Abdichtung der empfindlichen Dehnmessstreifen 6 ist eine Dichtungshülse 9 vorgesehen, die zum einen auf einer an der unteren Stützplatte 8 angeformten Haltenase 17 luft- und wasserdicht anliegt und zum anderen durch eine in eine in die obere Stützplatte 7 eingearbeitete Nut 8 eingesetzte O-Ring-Dichtung 10 gehalten ist. Die die einzelnen Dehnmessstreifen 6 miteinander verbindenden elektrischen Leitungen 24 sind zwischen der oberen und unteren Stützplatte 7, 8 sowie dem Grundkörper 2 und der Dichtungshülse 9 angeordnet. Durch die Kapselung der Messstellen 12 sind insbesondere die Dehnmessstreifen 6 vor schädlichen Umwelteinflüssen, insbesondere vor säurehaltiger Umgebungsluft geschützt.

Der Übergangsbereich zwischen der oberen bzw. der unteren Stützplatte 7 oder 8 und dem Grundkörper 2 ist mit der Bezugsziffer 19 versehen. Der Übergangsbereich 19 verläuft schräg von innen nach außen geneigt, vorzugsweise in einem Winkel von 45°, und zwar sowohl auf der inneren als auch auf der äußeren Seite des Grundkörpers 2. Somit weist die innere Wand des Grundkörpers 2 einen größeren Radius R_{w} auf als der innere Radius R₂ der Stützplatten 7 und 8 und die äußere Mantelfläche 5 ist kleiner bemessen als der äußere Radius R₁ der Stützplatten 7, 8. Diese besondere Ausgestaltung des Übergangsbereiches 19 bewirkt eine optimale Krafteinleitung von der Stützplatte 7 auf die verdünnte Wand des Grundkörpers 2, an der die Messstelle 12 vorgesehen ist. Gleiches gilt für die Kraftausleitung zwischen dem Grundkörper 2 und der unteren Stützplatte 8.

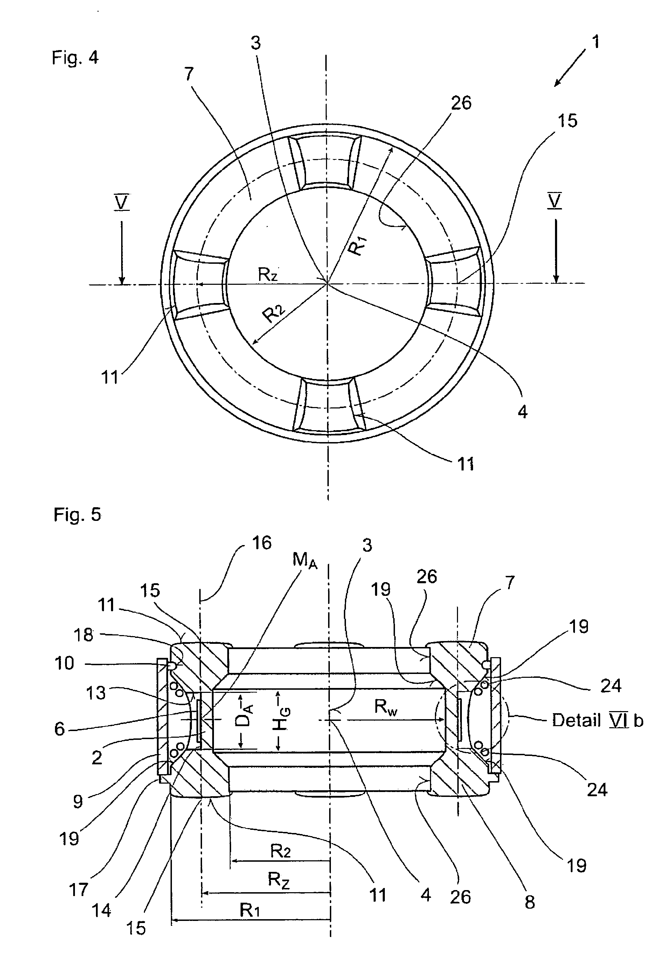

In den Figuren 4 und 5 sowie 6b ist eine weitere Ausgestaltung der Messvorrichtung 1 abgebildet, die nunmehr aus jeweils vier an den Stützplatten 7 und 8 angeformten Auflagern 11 besteht. Die geometrischen Mittelpunkte 15 der Auflager 11 von einer der Stützplatten 7 oder 8 liegen in einem Winkel von 90° benachbart zueinander.

Da nunmehr vier Messstellen 12 zwischen zwei gegenüberliegenden Auflagern 11 der beiden Stützplatten 7 und 8 vorzusehen sind, kann vorteilhafterweise die Anzahl der Dehnmessstreifen 6 pro Messstelle 12 gegenüber dem Ausführungsbeispiel nach den Figuren 1 bis 3 verringert sein. Bekanntlich ist die Gesamtanzahl der Dehnmessstreifen 6 durch den Faktor 4 zu teilen. Bei insgesamt vier Messstellen 12 sind daher zwei Dehnmessstreifen 6 pro Messstelle 12 ausreichend, um diese elektrotechnische Anforderung zu erfüllen.

Wahlweise kann der obere Dehnmessstreifen 6 gemäß Figur 6b senkrecht und der untere Dehnmessstreifen 6 parallel zu der Längsachse 3 des Grundkörpers 2 ausgerichtet sein oder eine umgekehrte Anordnung wird vorgegeben.

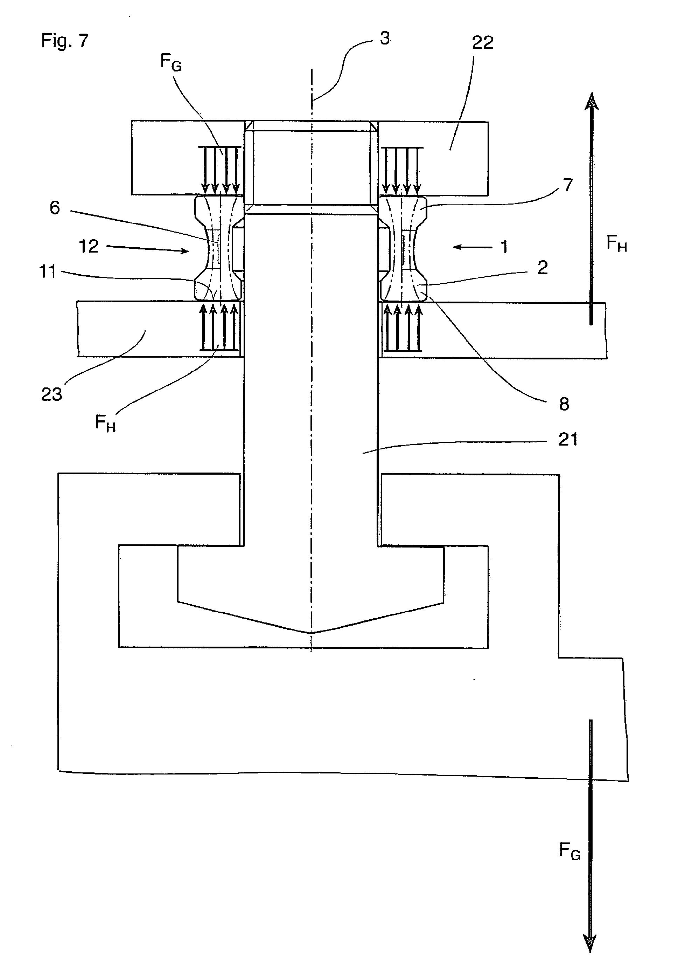

In Figur 7 ist schematisch ein Anwendungsbeispiel für die Messvorrichtung 1 nach den Figuren 1 bis 3 dargestellt. Der Grundkörper 2 sowie die Stützplatten 7 und 8 sind von einem Kraftübertragungsbolzen 21 vollständig durchgriffen, der ohne Spiel in der Durchgangsbohrung 26 der Stützplatte 7 angeordnet ist. Zwischen dem Bolzen 21 und der Stützplatte 8 ist ein zylindrischer Luftspalt vorhanden, da der Bolzen 21 in der Durchgangsbohrung 26 lediglich im Bereich der Stützplatte 7 zentriert anliegen soll. Die Messvorrichtung 1 ist zwischen zwei Halteplatten 22 und 23 eingespannt, durch die die Gewichtskraft F_{G} eines Containers an eine Hebeeinrichtung weitergeleitet ist, durch die eine entgegengesetzte Haltekraft F_{H} auf die Halteplatte 23 einwirkt.

Die Halteplatte 22 ist als Mutter ausgebildet und auf dem Bolzen 21 aufgeschraubt. Die Halteplatte 23 ist einer Hebevorrichtung zugeordnet, so dass über die Halteplatten 22 und 23 in die Messvorrichtung 1 Kräfte F_{G} bzw. F_{H} ein- bzw. ausgeleitet sind, durch die die Messvorrichtung 1 zusammengedrückt ist. Insbesondere in den Ausnehmungen 13, in denen die Messstelle 12 angeordnet ist, treten Dehnungen, Stauchungen und sonstige Biegekräfte auf, durch die die Länge und Breite der Dehnmessstreifen 6 verändert ist, so dass der elektrische Widerstand der Dehnmessstreifen 6 aufgrund der eingeleiteten Kräfte F_{G}, F_{H} beeinflusst ist. Durch diese Widerstandsveränderungen können die elektrischen Signale erzeugt werden, durch die Berechnungen möglich sind, welche Kräfte tatsächlich in den jeweiligen Auflagern 11 im Bereich der darunter fluchtend angeordneten Messstelle 12 aufgetreten sind.

Auch bei schräg eingeleiteten Kräften, die nicht parallel zu der Längsachse 3 des Grundkörpers 2 verlaufen, sind demnach Berechnungen möglich, um die Gesamtkraft, beispielsweise die Gewichtskraft des Containers, zu erfassen. Andere Anwendungen bei statischen Kraftübertragungen sind durch die erfindungsgemäße Messvorrichtung 1, ohne dass diese konstruktiv andersartig auszubilden ist, möglich.

Als Dehnmessstreifen 6 können für sämtliche Anwendungen Folien- oder Dünnfilmmessstreifen eingesetzt sein; auch optische Dehnmessstreifen sind zur Erzeugung von elektrischen Signalen ohne weiteres geeignet.

## Patentansprüche

1. Messvorrichtung (1) zur Bestimmung von axial auf die Messvorrichtung (1) einwirkenden Kraftkomponenten (F_{R} oder Fₓ), bestehend aus einem zylinderförmigen Grundkörper (2) und aus mindestens einer an dem Grundkörper (2) angebrachten aus mehreren Dehnmessstreifen (6) gebildeten Messstelle (12), wobei
an dem Grundkörper (2) zwei zueinander beabstandete und parallel verlaufende Stützplatten (7, 8) angebracht oder angeformt sind, deren Ebene senkrecht zu der Längsachse (3) des Grundkörpers (2) ausgerichtet ist, wobei die Stützplatten (7, 8) ringförmig ausgestaltet sind, wobei die jeweilige Stützplatte (7, 8) von dem Grundkörper (2) nach innen und/oder nach außen abstehen, **dadurch gekennzeichnet, dass** an den beiden Stützplatten (7, 8) jeweils mindestens drei zueinander beabstandete, die Kraftkomponente (F_{R} oder Fₓ) aufnehmende Auflager (11) angeordnet sind, die von dem Grundkörper (2) und aus der von den Stützplatten (7, 8) gebildeten Ebene abstehen, dass jeweils zwei gegenüberliegende Auflager (11) der beiden Stützplatten (7, 8) derart fluchtend zueinander angeordnet sind, dass die geometrischen Mittelpunkte (15) der Auflager (11) auf einer gemeinsamen Kraftübertragungsachse (16) verlaufen, die zu der Längsachse (3) des Grundkörpers (2) parallel ist, und dass die jeweiligen Dehnmessstreifen (6) der Messstelle (12) fluchtend zu der Kraftübertragungsachse (16) angeordnet sind.

2. Messvorrichtung nach Anspruch 1,
**dadurch gekennzeichnet,**
**dass** die Außenkonturen von zwei gegenüberliegenden Auflagern (11) miteinander korrespondieren und fluchtend zueinander verlaufen.

3. Messvorrichtung nach Anspruch 2,
**dadurch gekennzeichnet,**
**dass** die Auflager (11) ballig, kuppel-, dom-, kegelstumpf- oder pyramidenförmig ausgebildet sind.

4. Messvorrrichtung nach einem der vorgenannten Ansprüche,
**dadurch gekennzeichnet,**
**dass** der aus der Ebene der Stützplatten (7, 8) abstehende Querschnitt der Auflager (11) trapezförmig und in Richtung des Mittelpunktes (4) des Grundkörpers (2) verjüngend ausgebildet ist.

5. Messvorrichtung nach Anspruch 1,
**dadurch gekennzeichnet,**
**dass** in die Mantelfläche (5) des Grundkörpers (2) zur Bildung einer der Messstellen (12) eine Ausnehmung (13) eingearbeitet ist und dass die die Ausnehmung (13) begrenzende innere Mantelfläche (14) parallel zu der Längsachse (3) verläuft.

6. Messvorrichtung nach Anspruch 5,
**dadurch gekennzeichnet,**
**dass** die Dehnmessstreifen (6) in in die Mantelfläche (5) des Grundkörpers (2) eingearbeitete Ausnehmungen (13) eingesetzt sind und an der parallel zu der Längsachse (3) des Grundkörpers (2) verlaufenden Mantelfäche (14) der Ausnehmung (13) angeklebt sind und dass die Innenkonturen der Ausnehmungen (13) rund oder mehreckig ausgestaltet sind.

7. Messvorrichtung nach einem der vorgenannten Ansprüche,
**dadurch gekennzeichnet,**
**dass** der Übergangsbereich (19) zwischen der jeweiligen Stützplatte (7, 8) und dem Grundkörper (2) als schräge in Richtung des Mittelpunktes (4) des Grundkörpers (2) geneigte Fläche, vorzugsweise als in einem Winkel von 45° aus der Horizontalen geneigten Fläche, ausgebildet ist.

8. Messvorrichtung nach einem der vorgenannten Ansprüche,
**dadurch gekennzeichnet,**
**dass** der Grundkörper (2), die beiden Stützplatten (7, 8) und die von diesen abstehenden Auflagern (11) aus einem Ausgangskörper hergestellt sind und dass der Ausgangskörper aus einem hochfesten mechanischen belastbaren Werkstoff, vorzugsweise Edelstahl, gebildet ist.

9. Messvorrichtung nach einem der vorgenannten Ansprüche,
**dadurch gekennzeichnet,**
**dass** mindestens einer der Dehnmessstreifen (6) der jeweiligen Messstelle (12) parallel und ein benachbarter Dehnmessstreifen (6) senkrecht zu der Längsachse (3) des Grundkörpers (2) an einer in diesen eingearbeitete Mantelfläche (14) angeklebt ist.

10. Messvorrichtung nach einem der vorgenannten Ansprüche,
**dadurch gekennzeichnet,**
**dass** bei drei Auflagern (11) die jeweiligen benachbarten, geometrischen Mittelpunkte (15) in einem Winkel von 120° und bei vier Auflagern (11) die jeweiligen geometrischen Mittelpunkte (15) in einem Winkel von 90° zueinander angeordnet sind.

11. Messvorrichtung nach einem der vorgenannten Ansprüche,
**dadurch gekennzeichnet,**
**dass** an einer der beiden Stützplatten (7, 8) eine umlaufende Haltenase (17) angeformt ist, durch die eine Dichtungshülse (9) die Messstellen (12) wasser- und luftdicht verschließend abgestützt ist.

12. Messvorrichtung nach Anspruch 11,
**dadurch gekennzeichnet,**
**dass** in die der Haltenase (17) gegenüberliegenden Stützplatte (8) eine umlaufende Nut (18) eingearbeitet ist, in die ein O-Ring (10), eine Gummidichtung oder dergleichen eingesetzt ist, und dass die Dichtungshülse (9) über die Nut (18) übersteht und der Luftspalt zwischen der Nut (18) und der Dichtungshülse (9) mittels des O-Rings (10) oder Gummidichtung luft- und wasserdicht verschlossen ist.

13. Messvorrichtung nach einem der vorgenannten Ansprüche,
**dadurch gekennzeichnet,**
**dass** der Grundkörper (2) von einem Kraftübertragungsbolzen (21) durchgriffen ist und dass auf die jeweiligen Auflager (11) der Stützplatten (7, 8) jeweils eine fest mit dem Kraftübertragungsbolzen (21) verbundene Halteplatte (22, 23) aufliegt, durch die die axialen Kraftkomponenten (F_{R} oder Fₓ) auf die Auflager (11) übertragen sind.

14. Messvorrichtung nach einem der vorgenannten Ansprüche,
**dadurch gekennzeichnet,**
**dass** die Dehnmessstreifen (6) als Folien- oder Dünnfilmmessstreifen oder als optischer Dehnmessstreifen ausgeführt sind.

## Claims

1. A measuring device (1) for determining force components (F_{R} or F_{X}) acting axially on the measuring device (1), comprising a cylindrically shaped base body (2) and at least one measuring point (12) attached to the base body (2) and formed from several strain gauge strips (6), with two support plates (7, 8) that are spaced apart and running in parallel to one another being attached to or formed on the base body (2), the plane of which is aligned at right angles to the longitudinal axis (2) of the base body (2), with the support plates (7, 8) being configured in an annular arrangement, with the corresponding support plate (7, 8) protruding inwards and/or outwards from the base body (2),
**characterised in that,**
at least three supports (11) absorbing the force components (F_{R} or F_{X}) that are spaced apart from one another are arranged on each the two support plates (7, 8) and project from the base body (2) and from the plane formed by the support plates (7, 8), that each of two opposite support (11) of both support plates (7 ,8) are arranged in line with one another, that the geometrical midpoints (15) of the supports (11) run along a shared force transmission axis (16) which runs parallel to the longitudinal axis (3) of the base body (2), and that the particular strain gauge strips (6) of the measuring point (12) are arranged in line with the force transmission axis (16).

2. The measuring device in accordance with Claim 1,
**characterised in that**
the outside contours of two opposite supports (11) correspond to one another and run in line with one another.

3. The measuring device in accordance with Claim 2,
**characterised in that**
the supports (11) are configured as crowned, cupola-shaped, dome-shaped, shaped like a truncated cone or pyramid-shaped.

4. The measuring device in accordance one of the aforementioned claims,
**characterised in that**
the cross section of the support (11) projecting from the plane of the support plates (7, 8) is configured with a trapezoidal shape and tapering in the direction of the midpoint (4) of the base body (2).

5. The measuring device in accordance with Claim 1,
**characterised in that**
a recess (13) is worked into the jacket surface (5) of the base body (2) for forming one of the measuring points (12) and that the inner jacket surface (14) limiting the recess (13) runs parallel to the longitudinal axis (3).

6. The measuring device in accordance with Claim 5,
**characterised in that**
the strain gauge strips (6) are inserted into recesses (13) worked into the jacket surface (5) of the base body (2) and are glued onto the jacket surface (14) of the recesses (13) running parallel to the longitudinal axis (3) of the base body (2) and that the inside contours of the recesses (13) are configured as round or polygonal.

7. The measuring device in accordance with one of the aforementioned claims,
**characterised in that,**
the transition area (19) between the corresponding support plate (7, 8) and the base body (2) is configured as an angled surface tilted in the direction of the midpoint (4) of the base body (2), in a preferred embodiment as a surface tilted at an angle of 45° from the horizontal.

8. The measuring device in accordance with one of the aforementioned claims,
**characterised in that**,
the base body (2), the two support plates (7, 8) and the supports (11) projecting from them are manufactured from an initial body and that the initial body is formed from a high-strength, mechanically load-bearing material, preferably stainless steel.

9. The measuring device in accordance with one of the aforementioned claims,
**characterised in that**,
at least one of the strain gauge strips (6) of the corresponding measuring point (12) is glued in parallel to the longitudinal axis (3) of the base body (2) and an adjacent strain gauge strip (6) is glued at right angles to the longitudinal axis (3) of the base body (2), on a jacket surface (14) worked into the base body (2).

10. The measuring device in accordance with one of the aforementioned claims,
**characterised in that**,
when there are three supports (11), the corresponding adjacent, geometrical midpoints (15) are arranged in relation to one another at an angle of 120° and, when there are four supports (11), the corresponding geometrical midpoints (15) are arranged at an angle of 90° in relation to one another.

11. The measuring device in accordance with one of the aforementioned claims,
**characterised in that**,
a retaining lug (17) is formed around the perimeter of one of the two support plates (7, 8), by means of which one sealing sleeve (9) supports the measuring points (12) in a water-tight and air-tight arrangement.

12. The measuring device in accordance with Claim 11,
**characterised in that**,
a groove (18) is worked around the perimeter in the support plate (8) opposite to the retaining lug (17), with an O-ring (10), a rubber seal or the like inserted into the groove (18), and that the sealing sleeve (9) projects beyond the groove (18) and the air gap between the groove (18) and the sealing sleeve (9) is sealed with an air-tight and water-tight seal by means of the O-ring (10) or rubber seal.

13. The measuring device in accordance with one of the aforementioned claims,
**characterised in that**,
a force transmission pin (21) passes through the base body (2) and that one holding plate (22, 23) firmly connected to the force transmission pin (21) lies on each of the corresponding supports (11) of the support plates (7, 8), by means of which the axial force components (F_{R} or F_{X}) are transmitted to the supports (11).

14. The measuring device in accordance with one of the aforementioned claims,
**characterised in that**,
the strain gauge strips (6) are configured as foil or thin-film measuring strips or as optical strain gauge strips.

## Revendications

1. Dispositif de mesure (1) pour la détermination des composantes de force (F_{R} ou Fₓ) agissant axialement sur le dispositif de mesure (1), comprenant un corps de fond cylindrique (2) et au moins un point de mesure (12) prévu sur le corps de fond (2) et formé par plusieurs extensomètres à résistance (6), où il est fixé ou prévu sur le corps de fond (2) deux plaques d'appui (7, 8) parallèles et espacées entr'elles, dont le plan est perpendiculaire sur l'axe longitudinal (3) du corps de fond (2), où les plaques d'appui (7, 8) ont une forme annulaire, et où la plaque d'appui respective (7, 8) saille du corps de fond (2) vers l'intérieur et/ou vers l'extérieur,
**caractérisé en ce que**
sur les deux plaques d'appui (7, 8), il est prévu respectivement au moins trois appuis (11) espacés entr'eux pour l'absorption de la composante de force (F_{R} ou Fₓ), qui saillent du corps de fond (2) et du plan formé par les plaques d'appui (7, 8), que respectivement deux appuis opposés (11) des deux plaques d'appui (7, 8) sont disposés en alignement précis l'un par rapport à l'autre, que les centres géométriques (15) des appuis (11) se trouvent sur un axe de transmission de force commun (16) parallèle à l'axe longitudinal (3) du corps de fond (2) et que les extensomètres à résistance respectifs (6) du point de mesure (12) sont disposés en malignement précis par rapport à l'axe de transmission de force (16).

2. Dispositif de mesure d'après la revendication 1,
**caractérisé en ce que**
les contours extérieurs de deux appuis opposés (11) correspondent l'un à l'autre et sont disposés en alignement précis l'un par rapport à l'autre.

3. Dispositif de mesure d'après la revendication 2,
**caractérisé en ce que**
les supports (11) sont conçus sous la forme bombée, de dôme, de coupole, de tronc de cône ou de pyramide.

4. Dispositif de mesure d'après une des revendications précédentes,
**caractérisé en ce que**
la section de l'appui (11) saillant du plan des plaques d'appui (7, 8) est trapézoïdale et décroissante en direction du centre (4) du corps de fond (2).

5. Dispositif de mesure d'après la revendication 1,
**caractérisé en ce que**
pour la formation d'un des points de mesure (12), il est pratiqué un évidement (13) dans l'enveloppe (5) du corps de fond (2) et que l'enveloppe intérieure (14) délimitant l'évidement (13) est parallèle à l'axe longitudinal (3).

6. Dispositif de mesure d'après la revendication 5,
**caractérisé en ce que**
les extensomètres à résistance (6) sont insérés dans des évidements (13) pratiqués dans l'enveloppe (5) du corps de fond (2), et collés sur l'enveloppe (14) de l'évidement (13) orientée parallèlement à l'axe longitudinal (3) du corps de fond (2), et que les contours intérieurs des évidements (13) sont ronds ou polygonaux.

7. Dispositif de mesure d'après une des revendications précédentes,
**caractérisé en ce que**
l'endroit de transition (19) entre la plaque d'appui respective (7, 8) et le corps de fond (2) est conçu sous la forme d'une face oblique inclinée en direction du centre (4) du corps de fond (2), de préférences sous un angle de 45° par rapport au plan horizontal.

8. Dispositif de mesure d'après une des revendications précédentes,
**caractérisé en ce que**
le corps de fond (2), les deux plaques d'appui (7, 8) et les appuis (11) saillant de celles-ci sont réalisés à partir d'un corps de départ, et que le corps de départ est formé par un matériau à résistance élevée supportant des charges mécaniques, de préférence de l'acier spécial.

9. Dispositif de mesure d'après une des revendications précédentes,
**caractérisé en ce que**
au moins un des extensomètres à résistance (6) du point de mesure respectif (12) est collé parallèlement et un extensomètre à résistance voisin (6) perpendiculairement à l'axe longitudinal (3) du corps de fond (2) sur une enveloppe (14) pratiquée dans celui-ci.

10. Dispositif de mesure d'après une des revendications précédentes,
**caractérisé en ce que**
dans le cas de trois appuis (11), les centres géométriques voisins respectifs (15) sont disposés sous un angle de 120° et dans le cas de quatre appuis (11), les centres géométriques voisins respectifs (15) sont disposés sous un angle de 90° l'un par rapport à l'autre.

11. Dispositif de mesure d'après une des revendications précédentes,
**caractérisé en ce que**
sur une des deux plaques d'appui (7, 8), il est formé un nez périphérique de retient (17) portant une douille d'étoupage (9) assurant l'obturation étanche à l'eau et à l'air des points de mesure (12).

12. Dispositif de mesure d'après la revendication 11,
**caractérisé en ce que**
dans la plaque d'appui (8) opposée au nez de retirent (17), il est pratiqué une gorge périphérique (18) recevant un joint torique (10), un joint en caoutchouc ou un élément similaire, que la douille d'étoupage (9) saille au-delà de la gorge (18) et que l'interstice entre la gorge (18) et la douille d'étoupage (9) est obturé de manière étanche à l'eau et à l'air par le joint torique (10) ou par le joint en caoutchouc.

13. Dispositif de mesure d'après une des revendications précédentes,
**caractérisé en ce que**
le corps de fond (2) est traversé par un boulon de transmission de force (21) et que sur les appuis respectifs (11) des plaques d'appui (7, 8), il repose respectivement une plaque de retient (22, 23) liée rigidement avec le boulon de transmission de force (21), qui transmet les composantes de force axiales (F_{R} ou Fₓ) sur les appuis (11).

14. Dispositif de mesure d'après une des revendications précédentes,
**caractérisé en ce que**
les extensomètres à résistance (6) sont conçus sous la forme de bandes de mesure en feuille ou à filme fin, ou en tant qu'extensomètres à résistance optiques.
